(19) Europäisches Patentamt / European Patent Office / Office européen des brevets

(11) **EP 4 317 578 A1**

(12) **EUROPEAN PATENT APPLICATION**
published in accordance with Art. 153(4) EPC

(43) Date of publication:
**07.02.2024 Bulletin 2024/06**

(21) Application number: **22780928.2**

(22) Date of filing: **29.03.2022**

(51) International Patent Classification (IPC):
$D06P\ 1/44^{(2006.01)}$ $D06P\ 1/50^{(2006.01)}$
$D06P\ 1/56^{(2006.01)}$ $D06P\ 5/00^{(2006.01)}$
$D06P\ 5/30^{(2006.01)}$ $D06M\ 15/09^{(2006.01)}$
$D06M\ 15/227^{(2006.01)}$

(52) Cooperative Patent Classification (CPC):
**D06M 15/09; D06M 15/227; D06P 1/44; D06P 1/50;
D06P 1/56; D06P 5/00; D06P 5/30**

(86) International application number:
**PCT/JP2022/015465**

(87) International publication number:
**WO 2022/210717 (06.10.2022 Gazette 2022/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.03.2021 JP 2021056358**

(71) Applicant: **Mitsubishi Chemical Corporation
Chiyoda-ku
Tokyo 100-8251 (JP)**

(72) Inventor: **OONISHI Hideaki
Tokyo 100-8251 (JP)**

(74) Representative: **Hoffmann Eitle
Patent- und Rechtsanwälte PartmbB
Arabellastraße 30
81925 München (DE)**

(54) **PRETREATMENT AGENT FOR INKJET TEXTILE PRINTING AND INKJET TEXTILE PRINTING METHOD**

(57) A pretreatment agent for inkjet textile printing and an inkjet textile printing method that can realize improvement in productivity, cost reduction, energy saving, and space saving while ensuring ink permeation and resistance to color bleeding are provided. The pretreatment agent for inkjet textile printing of the present invention contains an N-vinylformamide-based cationic polymer and an antifoaming agent.

EP 4 317 578 A1

**Description**

[Field of the Invention]

The present invention relates to a pretreatment agent for inkjet textile printing and an inkjet textile printing method.
Priority is claimed on Japanese Patent Application No. 2021-056358, filed in Japan on March 30, 2021, the entire contents of which is incorporated herein by reference.

[Description of Related Art]

Inkjet textile printing has the advantage that, as compared with a conventional method using a plate, there is no need to wash or store the plate and application to a wide variety of products is easy, so that a delivery time can be shortened. However, inkjet textile printing is expensive in terms of equipment and ink, and requires a pretreatment step. Patent Documents 1 to 3 disclose techniques of performing drying and performing inkjet printing after applying a pretreatment agent to a textile. Patent Document 4 to 5 disclose techniques of performing inkjet printing without drying after applying a pretreatment agent to a textile.

[Citation List]

[Patent Document]

[Patent Document 1]
Japanese Unexamined Patent Application, First Publication No. H11-302987
[Patent Document 2]
Japanese Unexamined Patent Application, First Publication No. 2003-3385
[Patent Document 3]
Japanese Unexamined Patent Application, First Publication No. H09-279487
[Patent Document 4]
Published Japanese Translation No. 2017-530269 of the PCT international Publication
[Patent Document 5]
Japanese Unexamined Patent Application, First Publication No. 2016-089288

[Summary of Invention]

[Technical Problem]

The methods of drying after applying a pretreatment agent as in Japanese Unexamined Patent Application, First Publication No. H11-302987, Japanese Unexamined Patent Application, First Publication No. 2003-3385, and Japanese Unexamined Patent Application, First Publication No. H09-279487 require a space for installing a dryer, and energy and cost required for the drying, and productivity is low as compared with methods in which the drying is not performed. On the other hand, methods of not drying after applying a pretreatment agent as in Published Japanese Translation No. 2017-530269 of the PCT international Publication and Japanese Unexamined Patent Application, First Publication No. 2016-089288, have a problem that color tends to bleed because of a capillary action of ink, and ink permeation to an inside of a textile is inferior.
An object of the present invention is to provide a pretreatment agent for inkjet textile printing and an inkjet textile printing method that can realize improvement in productivity, cost reduction, energy saving, and space saving while ensuring ink permeation and resistance to color bleeding.

[Solution to Problem]

In the present invention, the problem of permeation and bleeding can be solved by applying a pretreatment agent for inkjet textile printing, which is obtained by combining a specific cationic polymer and a specific agent, to a textile, even if inkjet printing is performed without drying the pretreated textile.
The present invention has the following aspects.

[1] A pretreatment agent for inkjet textile printing comprising:

EP 4 317 578 A1

an N-vinylformamide-based cationic polymer and an antifoaming agent.

[2] The pretreatment agent for inkjet textile printing according to [1], wherein a content ratio (mass ratio) of the antifoaming agent to the N-vinylformamide-based cationic polymer in the pretreatment agent for inkjet textile printing is 2.0 or more.

[3] The pretreatment agent for inkjet textile printing according to [1] or [2], wherein a content ratio (mass ratio) of the antifoaming agent to the N-vinylformamide-based cationic polymer in the pretreatment agent for inkjet textile printing is 4.0 or less.

[4] The pretreatment agent for inkjet textile printing according to any one of [1] to [3], wherein the antifoaming agent contains one or more types selected from the group consisting of an alcohol-based antifoaming agent and a fatty acid derivative-based antifoaming agent.

[5] The pretreatment agent for inkjet textile printing according to any one of [1] to [4], further comprising a color deepening agent.

[6] The pretreatment agent for inkjet textile printing according to [5], wherein the color deepening agent has compatibility with the N-vinylformamide-based cationic polymer.

[7] The pretreatment agent for inkjet textile printing according to [5] or [6], wherein the color deepening agent contains one or more types selected from the group consisting of N-alkylolamide and glycol ethers.

[8] The pretreatment agent for inkjet textile printing according to any one of [1] to [7], further comprising a pasting agent.

[9] The pretreatment agent for inkjet textile printing according to [8], wherein the pasting agent includes a pasting agent having compatibility with the N-vinylformamide-based cationic polymer and being nonionic or anionic.

[10] The pretreatment agent for inkjet textile printing according to [8] or [9], wherein the pasting agent contains one or more types selected from the group consisting of methyl cellulose, hydroxypropyl methyl cellulose, hydroxyethyl cellulose, and guar gum.

[11] The pretreatment agent for inkjet textile printing according to any one of [8] to [10], wherein the pasting agent further contains montmorillonite.

[12] The pretreatment agent for inkjet textile printing according to any one of [1] to [11], wherein the N-vinylformamide-based cationic polymer contains one or more types selected from the group consisting of polyamidine and polyvinylamine.

[13] The pretreatment agent for inkjet textile printing according to any one of [1] to [12], wherein a content of N-vinylformamide-based cationic polymer is 0.6% by mass or more and 1.4% by mass or less with respect to 100% by mass of a total mass of the pretreatment agent for inkjet textile printing.

[14] A pretreatment agent for inkjet textile printing comprising a cationic polymer and an antifoaming agent, wherein a cationic degree of the cationic polymer is 5.0 meq/g or more and a viscosity of the cationic polymer is 100 mPa·s or more.

[15] An inkjet textile printing method comprising pretreating a textile with the pretreatment agent for inkjet textile printing according to any one of [1] to [14] and performing inkjet printing on a pretreated area of the pretreated textile without drying the pretreated textile.

[16] The inkjet textile printing method according to [15], wherein ink used in the inkjet printing is a disperse dye.

[17] An inkjet textile printing method comprising:

pretreating a textile with a pretreatment agent for inkjet textile printing; and
performing inkjet printing on a pretreated area of the pretreated textile without drying the pretreated textile,
wherein the pretreatment agent for inkjet textile printing contains an N-vinylformamide-based cationic polymer.

[Effects of Invention]

According to the present invention, in inkjet textile printing of a textile, it is possible to realize improvement in productivity, cost reduction, energy saving, and space saving while ensuring ink permeation and resistance to color bleeding by performing inkjet printing without drying the pretreated textile after applying the pretreatment agent.

[Description of Embodiments]

Hereinafter, a pretreatment agent for inkjet textile printing (hereinafter, also simply referred to as the "pretreatment agent") of the present invention will be described in detail. Although description of constituent elements described below may be made based on representative embodiments of the present invention, the present invention is not limited to such embodiments.

<Pretreatment Agent>

The pretreatment agent of the present invention contains an N-vinylformamide-based cationic polymer and an antifoaming agent. The pretreatment agent of the present invention may contain a color deepening agent, for example, a color deepening agent having compatibility with the N-vinylformamide-based cationic polymer, or a pasting agent. The pretreatment agent of the present invention may contain an optional component such as water or an organic solvent.

<N-vinylformamide-based Cationic Polymer>

A pretreatment agent according to a first embodiment of the present invention contains the N-vinylformamide-based cationic polymer. The N-vinylformamide-based cationic polymer is a cationic polymer obtained by polymerization using N-vinylformamide, and has an effect of strengthening adhesiveness of ink onto a textile. The effect of strengthening the adhesiveness of ink is related to a degree of the cationic property.
The N-vinylformamide-based cationic polymer is not particularly limited, and polyamidine and polyvinylamine can be examples thereof. The polyamidine can be obtained by copolymerization of acrylonitrile and N-vinylformamide. As the N-vinylformamide-based cationic polymer, only one type may be used, or two or more types may be used in combination. It is preferable that one or more types selected from the group consisting of polyamidine and polyvinylamine are contained as the N-vinylformamide-based cationic polymer.
Preferable values of a cationic degree of the N-vinylformamide-based cationic polymer and a viscosity at a time when the cationic polymer is made into an aqueous solution with a polymer concentration of 15% are as described below.
As the N-vinylformamide-based cationic polymer, a commercial product may be used. PVADL (manufactured by Mitsubishi Chemical Corporation), SC-700, and SC-700L (all manufactured by HYMO Co.,Ltd) can be examples of the polyamidine. PVAM0570B, PVAM0595B, and KP8040 (all manufactured by Mitsubishi Chemical Corporation) can be examples of the polyvinylamine.

<Cationic Degree and Viscosity of Cationic Polymer>

A pretreatment agent according to a second embodiment of the present invention contains a cationic polymer. The cationic degree of the cationic polymer is 5.0 meq/g or more, and the viscosity at a time when the cationic polymer is made into an aqueous solution with a polymer concentration of 15% is 100 mPa·s or more. In particular, it is possible to suppress bleeding by satisfying the cationic degree and the viscosity of the cationic polymer. The reason for this is considered to be as follows. Ink (dye) is negatively charged, and by using a cationic polymer having an appropriate amount of positive charges, both are attracted to each other (the phenomenon is also referred to as charge neutralization). And the ink (dye) is less likely to move from a desired position, and a position is fixed. In addition, because the viscosity of the cationic polymer is equal to or more than a certain value, the cationic polymer encloses the ink (dye), and it is possible to prevent the ink (dye) from moving. With the synergistic effect of the charge neutralization and the enclosing, bleeding generated by the movement of the ink (dye) from the desired position can be suppressed.
From the above, the cationic degree of the cationic polymer is preferably 5.0 meq/g or more, while being preferably 25 meq/g or less, more preferably 20 meq/g or less, still more preferably 10 meq/g or less, and particularly preferably 8.0 meq/g or less. It is possible to combine the upper limits and the lower limit described above in any manner. For example, the cationic degree is preferably 5.0 meq/g or more and 25 meq/g or less, more preferably 5.0 meq/g or more and 20 meq/g or less, still more preferably 5.0 meq/g or more and 10 meq/g or less, and particularly preferably 5.0 meq/g or more and 8.0 meq/g or less.
In addition, the viscosity at a time when the cationic polymer is made into an aqueous solution with a polymer concentration of 15% is preferably 100 mPa·s or more, and more preferably 150 mPa·s or more, while being preferably 700 mPa·s or less, more preferably 500 mPa·s or less, still more preferably 200 mPa·s or less, and particularly preferably 180 mPa·s or less. It is possible to combine the upper limits and the lower limits described above in any manner. For example, the viscosity is preferably 100 mPa·s or more and 700 mPa·s or less, more preferably 100 mPa·s or more and 500 mPa·s or less, still more preferably 150 mPa·s or more and 200 mPa·s or less, and particularly preferably 150 mPa·s or more and 180 mPa·s or less.

<Antifoaming Agent>

The pretreatment agent of the present invention contains an antifoaming agent. Any one used for ordinary fiber treatment can be used, and an alcohol-based antifoaming agent, a fatty acid derivative-based antifoaming agent, and a silicone-based antifoaming agent are examples of the antifoaming agent. Among these, from the viewpoint of detergency during washing off dyes and auxiliaries that have not been fixed to a textile, it is preferable that one or more types selected from the group consisting of the alcohol-based antifoaming agent and the fatty acid derivative-based antifoaming agent are contained. As the antifoaming agent, only one type may be used, or two or more types may be used in combination.

(Alcohol-based Antifoaming Agent)

A HLB value of the alcohol-based antifoaming agent is preferably 15 or less, and more preferably 10 or less.

As the alcohol-based antifoaming agent, a higher alcohol can be preferably used. The number of carbon atoms of the higher alcohol is preferably 12 or more, while being preferably 25 or less, and more preferably 22 or less. For example, the number is preferably 12 or more and 25 or less, and more preferably 12 or more and 22 or less.

In addition, the alcohol-based antifoaming agent may be any one of a primary alcohol, a secondary alcohol, and a tertiary alcohol. Among these, a primary alcohol and a secondary alcohol are preferable.

Furthermore, as the alcohol-based antifoaming agent, any one of a monohydric alcohol and a polyhydric alcohol can be used. The number of hydroxy groups in an alcohol is preferably 2 or more, while being preferably 4 or less, and more preferably 3 or less. For example, the number is preferably 2 or more and 4 or less, and more preferably 2 or more and 3 or less.

As the alcohol-based antifoaming agent, an alcohol having an ether group can also be preferably used. A polyalkylene glycol-based compound and an alcohol obtained by performing addition polymerization of an alkylene oxide to a higher alcohol are examples of the alcohol having an ether group. In this case, as the alkylene oxide, an ethylene oxide or a propylene oxide can be used. Among these, a polyalkylene glycol-based compound is preferable, and furthermore, among them, a polyethylene glycol-based compound is more preferable. In addition, it is still more preferable that the polyethylene glycol-based compound has an alkyl group. That is, an alkyl polyethylene glycol-based compound is more preferable.

In addition to the above-described compounds, diamylphenoxyethanol, 3-heptanol, 2-ethylhexanol, an acetylene alcohol, acetylene glycol, an isopropyl alcohol, and an alkyl polyethylene glycol-based compound can be examples of the alcohol-based antifoaming agent.

Among the above, a higher alcohol or an alcohol having an ether group is preferable, a higher alcohol or a polyalkylene glycol-based compound is more preferable, a higher alcohol or a polyethylene glycol-based compound is still more preferable, and a higher alcohol or an alkyl polyethylene glycol-based compound is particularly preferable.

ANTI-FROTH F-102 and F-103 (all manufactured by DKS Co., Ltd.), an antifoaming agent (manufactured by FURUKAWA CHEMICAL INDUSTRY CO., LTD.), and SENKASALT KS CONC S (manufactured by SENKA corporation) are examples of a commercial product of the alcohol-based antifoaming agent.

(Fatty Acid Derivative-based Antifoaming Agent)

A HLB value of the fatty acid derivative-based antifoaming agent is preferably 15 or less, and more preferably 10 or less.

Mineral oil, a sorbitan fatty acid ester, a fatty acid ester, a glycerin fatty acid ester, and a sucrose fatty acid ester can be examples of the fatty acid derivative-based antifoaming agent. Among these, mineral oil having an excellent immediate effect is preferable. In addition, the mineral oil is preferably a long chain alkyl-based one.

The number of carbon atoms of a fatty acid used in a raw material of a fatty acid derivative of the fatty acid derivative-based antifoaming agent is preferably 16 or more, and more preferably 18 or more. Meanwhile, the number is preferably 24 or less, and more preferably 22 or less. It is possible to combine the upper limits and the lower limits described above in any manner. For example, the number is preferably 16 or more and 24 or less, and more preferably 18 or more and 22 or less.

A stearic acid, an oleic acid, an erucic acid, and a behenic acid are examples of the fatty acid used in the raw material of the fatty acid derivative of the fatty acid derivative-based antifoaming agent. Among these, the stearic acid is preferable.

S-39H and S-49H (manufactured by DKS Co., Ltd.), NK-2 (manufactured by Osaka Chemical Ind. Co., Ltd.), and SENKAANTIFOAM NS-1000 and SENKASALT SL-12 (all manufactured by SENKA corporation) are examples of a commercial product of the fatty acid derivative-based antifoaming agent.

(Silicone-based Antifoaming Agent)

The silicone-based antifoaming agent is not particularly limited. For example, both aqueous one and nonaqueous one can be used, an oil type composed of silicone oil, an oil compound type in which a dispersant is added to silicone oil, an emulsion type in which silicone oil is made into an emulsion, or a self-emulsifying type may be used. Among these, an emulsion type is preferable from the viewpoint of supplementing the dispersibility in water. Among the emulsion types, an O/W type is more preferable.

Specifically, polydimethylsiloxane, dimethyl silicone, and fluorosilicone can be examples of the silicone-based antifoaming agent. Among these, polydimethylsiloxane is preferable.

TSA730, TSA732, TSA770, TSA772, TSA7341, YMA6509, and TSA780 (all manufactured by GE TOSHIBA SILICONES Co., Ltd.), M-6500 and M-700 (all manufactured by Ipposha Oil Industries Co., Ltd.), Antifoam SS and Antifoam S-8 (all manufactured by NISSEI KASEI CO.,LTD.), and KM-70, KM-71, KM-73, KM-73A, KM-90, KM-89, KM-83A, KM-75, KS-502, KS-537, KM-98, KM-7750, and X-50-1041 (all manufactured by Shin-Etsu Chemical Co., Ltd.) are examples of a commercial product of the silicone-based antifoaming agent.

<Color Deepening Agent>

The pretreatment agent of the present invention may contain a color deepening agent. Because the color deepening agent is blended, it is possible to further improve ink permeation to a textile.

As the color deepening agent, among color deepening agents used for ordinary fiber treatment, one having compatibility with the N-vinylformamide-based cationic polymer is preferable. "The color deepening agent has compatibility with the N-vinylformamide-based cationic polymer" means that a sieve residue is less than 10 g when 250 g of a 1% by mass aqueous solution of the N-vinylformamide-based cationic polymer and 250 g of a 1% by mass aqueous solution of the color deepening agent are mixed and the mixture is filtered through an 80-mesh sieve after being left for 24 hours at 25°C.

The color deepening agent having compatibility with the N-vinylformamide-based cationic polymer is not particularly limited, and amides, glycol ethers, and polyethers can be examples thereof. Among these, amides are preferable, and furthermore, among them, N-alkylolamide is more preferable. As the color deepening agent, only one type may be used, or two or more types may be used in combination.

Sanfloren SN (manufactured by NICCA CHEMICAL CO., LTD.), Hiol 420 (manufactured by Hayashi Chemical Industry Co., Ltd.), and Cellopol PA-19S (manufactured by SANYO CHEMICAL INDUSTRIES, LTD.) are examples of a commercial product of the color deepening agent.

<Pasting Agent>

The pretreatment agent of the present invention may contain a pasting agent. It is preferable that the pasting agent includes a pasting agent having compatibility with the N-vinylformamide-based cationic polymer and being nonionic or anionic. The pretreatment agent can be adjusted to have an appropriate viscosity by blending the pasting agent. "The pasting agent has compatibility with the N-vinylformamide-based cationic polymer" means that a sieve residue is less than 10 g when 250 g of a 1% by mass aqueous solution of the N-vinylformamide-based cationic polymer and 250 g of a 1% by mass aqueous solution of the pasting agent are mixed and the mixture is filtered through an 80-mesh sieve after being left for 24 hours at 25°C.

Hydroxyethyl cellulose, methyl cellulose, hydroxypropyl methyl cellulose, guar gum, and montmorillonite can be examples of the nonionic or anionic pasting agent having compatibility with the N-vinylformamide-based cationic polymer. As the pasting agent, only one type may be used, or two or more types may be used in combination.

It is preferable that one or more types selected from the group consisting of methyl cellulose, hydroxypropyl methyl cellulose, hydroxyethyl cellulose, and guar gum are contained as the pasting agent. In addition, considering excellent detergency during washing off dyes and auxiliaries that have not been fixed to a textile, it is more preferable that montmorillonite and one or more types selected from the group consisting of methyl cellulose, hydroxypropyl methyl cellulose, hydroxyethyl cellulose, and guar gum are combined and used as the pasting agent.

Hydroxypropyl methyl cellulose (manufactured by Shin-Etsu Chemical Co., Ltd.) and guar gum (ESAFLOR, manufactured by Sansho Co., Ltd.) are examples of a commercial product of the pasting agent.

<Optional Component>

The pretreatment agent of the present invention may include, as an optional component, water, an organic solvent, a multivalent metal salt, an organic acid, a dissolution aid, a viscosity modifier, a pH modifier, a reduction inhibitor, a preservative, and a surfactant may be added in a range where an effect is not impaired. The organic solvent is not particularly limited, and glycerin, ethylene glycol, diethylene glycol, 1,2-hexanediol, and propylene glycol can be examples thereof.

<Formulation>

An N-vinylformamide-based cationic polymer content in the pretreatment agent of the present invention varies depending on a type of a textile to be treated, an application amount of the pretreatment agent, and the like, but the content is preferably 0.6% by mass or more, and more preferably 0.8% by mass or more as a solid content with respect to a total mass of the pretreatment agent. When the N-vinylformamide-based cationic polymer content is equal to or more than the lower limit value, it is easy to improve the adhesiveness of ink to a textile. An upper limit of the N-vinylformamide-based cationic polymer content is preferably 1.4% by mass or less, and more preferably 1.3% by mass or less as the solid content with respect to the total mass of the pretreatment agent. When the N-vinylformamide-based cationic polymer content is equal to or less than the upper limit value, the detergency during washing off dyes and auxiliaries that have not been fixed to a textile is improved, and a texture is also improved.

It is possible to combine the upper limits and the lower limits described above in any manner. For example, the content is preferably 0.6% by mass or more and 1.4% by mass or less, and more preferably 0.8% by mass or more and 1.3% by mass or less.

A content ratio (mass ratio) of the antifoaming agent to the N-vinylformamide-based cationic polymer in the pretreatment agent of the present invention is preferably 1.0 or more, more preferably 1.5 or more, and still more preferably 2.0 or more from the viewpoint of the texture and the detergency. Considering that ink is less likely to bleed, an upper limit of the content ratio is preferably 4.0 or less, and more preferably 3.5 or less.

It is possible to combine the upper limits and the lower limits described above in any manner. For example, the ratio is preferably 2.0 or more and 4.0 or less, and more preferably 2.0 or more and 3.5 or less.

When the pretreatment agent of the present invention contains a color deepening agent, considering excellent ink permeation to a textile, a color deepening agent content in the pretreatment agent is preferably 400 parts by mass or more, and more preferably 450 parts by mass or more with respect to 100 parts by mass of a total mass of the N-vinylformamide-based cationic polymer. Considering that ink is less likely to bleed, an upper limit of the color deepening agent content is preferably 2000 parts by mass or less, and more preferably 1500 parts by mass or less with respect to the total mass of the N-vinylformamide-based cationic polymer.

It is possible to combine the upper limits and the lower limits described above in any manner. For example, the content is preferably 400 parts by mass or more and 2000 parts by mass or less, and more preferably 450 parts by mass or more and 1500 parts by mass or less.

When the pretreatment agent of the present invention contains a pasting agent, the color deepening agent content in the pretreatment agent is preferably 200 parts by mass or more, and more preferably 300 parts by mass or more with respect to 100 parts by mass of a total mass of the pasting agent.

When the pretreatment agent of the present invention contains a pasting agent, a pasting agent content in the pretreatment agent varies depending on a viscosity required for an applying method, but considering that it is easy to increase the viscosity of the pretreatment agent, the content is preferably 0.5% by mass or more, and more preferably 1.0% by mass or more as a solid content with respect to the total mass of the pretreatment agent. Considering the excellent detergency during washing off dyes and auxiliaries that have not been fixed to a textile, the pasting agent content is preferably 1.7% by mass or less as the solid content with respect to the total mass of the pretreatment agent.

It is possible to combine the upper limit and the lower limits described above in any manner. For example, the content is preferably 0.5% by mass or more and 1.7% by mass or less, and more preferably 1.0% by mass or more and 1.7% by mass or less.

[Inkjet Textile Printing Method]

An inkjet textile printing method of the present invention includes a step of pretreating a textile with a pretreatment agent for inkjet textile printing, and a step of performing inkjet printing on an area of the textile, in which the pretreatment has been performed, without drying the pretreated textile. As the pretreatment agent for inkjet textile printing, the pretreatment agent for inkjet textile printing of the present invention may be used, or a pretreatment agent for inkjet textile printing containing the N-vinylformamide-based cationic polymer may be used.

<Pretreatment Agent Applying Step>

A material of the textile to be pretreated is not particularly limited as long as the textile is usually used for inkjet textile printing, and polyester is an example thereof.

The pretreatment of the textile can be performed, for example, by applying the pretreatment agent to the textile. A method of immersing the textile in the pretreatment agent, a method of applying the pretreatment agent with a roll coater, a method of applying the pretreatment agent with a squeegee, and a method of injecting the pretreatment agent with a spray device are examples of a method of applying the pretreatment agent. The method of applying the pretreatment agent with a squeegee is more preferable because the pretreatment agent can be applied only to a portion, to which inkjet ink will be applied, and the method can be operated with simple apparatus.

<Inkjet Printing Step>

In the inkjet textile printing method of the present invention, inkjet printing is performed without drying the pretreated textile. However, "inkjet printing is performed without drying the pretreated textile" means that inkjet printing is performed on an area coated with the pretreatment agent while the pretreatment agent on the textile is in a liquid state.

A disperse dye can be an example of ink used in inkjet printing. The pretreatment agent of the present invention is particularly suitably used when inkjet textile printing is performed with a disperse dye on a polyester textile.

A known method can be adopted for the inkjet textile printing method of the present invention except that the pretreatment agent for inkjet textile printing of the present invention or the pretreatment agent for inkjet textile printing containing the N-vinylformamide-based cationic polymer is used and inkjet printing is performed without drying the pretreated textile. For example, after inkjet printing, an ink is caused to permeate to an inside of the textile by dry heat treatment (oven) or steam heat treatment (steaming), and dyes and auxiliaries that have not been fixed to the textile are washed off by washing treatment. As the washing treatment, a known washing method can be adopted, but reduction washing is preferable and alkali reduction treatment is more preferable.

As described above, in the present invention, the pretreatment agent containing the N-vinylformamide-based cationic polymer and the antifoaming agent is used. It is possible to ensure ink permeation and resistance to color bleeding by using the pretreatment agent even if inkjet printing is performed without drying after applying the pretreatment agent. And by not performing the drying after applying the pretreatment agent, it is possible to improve productivity and to realize cost reduction, energy saving, and space saving.

[Examples]

The present invention will be specifically described below with reference to Examples, but the present invention is not limited by the following description.

[Material]

Materials used in Examples, Comparative Examples, and Reference Examples are shown below.

<Cationic Polymer>

PVADL: polyamidine (trade name "PVADL", manufactured by Mitsubishi Chemical Corporation, aqueous solution with polymer concentration of 26%)
PVAM: polyvinylamine (trade name "PVAM0570B", manufactured by Mitsubishi Chemical Corporation, aqueous solution with polymer concentration of 23%)
Poly DADMAC (manufactured by SENKA corporation)
Polyallylamine (manufactured by NITTOBO MEDICAL CO.,LTD., aqueous solution with polymer concentration of 15%)
Amine-epichlorohydrin condensation polymer (manufactured by Yokkaichi Chemical Co., Ltd.)

<Pasting Agent>

Hydroxypropyl methyl cellulose (manufactured by Shin-Etsu Chemical Co., Ltd.)
Guar gum (ESAFLOR, manufactured by Sansho Co., Ltd.)

<Color Deepening Agent>

Sanfloren SN (N-alkylolamide, manufactured by NICCA CHEMICAL CO., LTD.)
Hiol 420 (based on glycol ether of higher alcohol, manufactured by Hayashi Chemical Industry Co., Ltd.)
Cellopol PA-19S (polyether-based, manufactured by SANYO CHEMICAL INDUSTRIES, LTD.)

<Antifoaming Agent>

Alcohol-based antifoaming agent 1 (product name: antifoaming agent, manufactured by FURUKAWA CHEMICAL INDUSTRY CO., LTD., contained component: higher alcohol)
Alcohol-based antifoaming agent 2 (contained component: alkyl polyethylene glycol-based compound)
Silicone-based antifoaming agent (emulsion type, contained component: polydimethylsiloxane)
Fatty acid derivative-based antifoaming agent (contained component: mineral oil (long chain alkyl-based))

<Preservative>

Neoguard (manufactured by FURUKAWA CHEMICAL INDUSTRY CO., LTD.)

[Measurement of Cationic Degree of Cationic Polymer]

Cationic degrees of the above-described cationic polymers were measured as follows.
Approximately 0.4 g (accurately weighed) of cationic polymer was sampled in a 100 ml volumetric flask, desalted water was added thereto to make 100 ml (liquid A). 5 ml was sampled from the liquid A, and desalted water was added to make 200 ml, and a solution was prepared to have pH 2.5 with a 0.1 N HCl aqueous solution. Thereafter, 3 drops of toluidine blue were added thereto, and titration was performed using a 1/400N-PVSK (potassium polyvinyl sulfate) solution until color of the prepared solution changed from blue to red. A blank test was also performed in the same manner, and the cationic degree was calculated according to the following expression. Evaluation results are shown in Tables.

$$\{(1/400) \times (\text{Factor of PVSK solution}) \times (\text{Titration amount (ml)} - \text{Blank titration amount (ml)}) \times (100/5)\}/\{(\text{Sampling amount (g)}) \times (\text{Polymer concentration})\}$$

[Measurement of Viscosity of Cationic Polymer]

Viscosities of the above-described cationic polymers were measured as follows.
For PVADL and PVAM, water was added thereto to dilute them to make aqueous solutions with a polymer concentration of 15%, thereby obtaining measurement samples. Polyallylamine was used as it was as a measurement sample. A temperature of each measurement sample was set to 25°C in a thermostatic tank, and a viscosity was measured with a B-type viscometer (No. 4 rotor, 60 rpm x 5 minutes). Evaluation results are shown in Tables.

[Examples 1 and 2 and Comparative Example 1 to 6]

<Preparation of Pretreatment Agent>

Pretreatment agents were prepared in accordance with formulations shown in Table 1. Specifically, each component was put into a container, stirred for 2 hours using a stirrer, and then aged by standing still for 24 hours.
A unit of a numerical value representing each component content in Table 1 is % by mass, and each component is expressed as a content ratio of an active component (solid content) with respect to a total mass of a pretreatment agent, and a pasting agent content was adjusted so that a liquid viscosity of the pretreatment agent was 2000 mPa·s or more. Water was adjusted and added such that a total amount of a pretreatment agent was 100% by mass. In Table 1, columns where numerical values are not listed mean that the components are not contained.

<Pretreatment>

Using a screen textile printing machine (SP300ARD of Tsujii Senki Kogyo Co., Ltd.), a textile attached to a vinyl chloride plate using a grounding agent was provided under a 120-mesh screen, a pretreatment agent was stored on a portion without the textile on the screen, and a metal roll was moved by an electromagnet to apply the pretreatment agent to the textile without unevenness. An application amount of the pretreatment agent was 1.0 to 1.5 g/cm$^2$ although being affected by a viscosity of a formulation of the pretreatment agent, an electromagnetic force, and a basis weight of the textile.

[Examples 3 to 11]

Pretreatment agents were prepared in the same manner as in Examples 1 and 2 and Comparative Examples 1 to 6 except that pasting agent contents were not adjusted.

After that, pretreatment was performed in the same manner as in Examples 1 and 2 and Comparative Examples 1 to 6.

<Inkjet Printing>

For the textiles of Examples 1 to 11 and Comparative Examples 1 to 6, the textiles were transferred to an inkjet apparatus (Inkjetlabo, manufactured by Cluster Technology Co., Ltd.) within 5 seconds after the application of the pretreatment agent, and ink was applied to an area coated with the pretreatment agent.

As ink, black disperse ink manufactured by TOSHIN KOGYO CO.,LTD was used. As the textile, polyester de chine (warp density: 221 lines/inch, weft density: 108 lines/inch, areal weight: 91 g/m$^2$) (manufactured by SHIKISENSHA CO., LTD.) was used.

As a printed image pattern, a grid-shaped pattern was used. In the pattern, a size of a grid was 2 mm square, and a line thickness was 0.2 mm.

<Steam Heat Treatment>

The textile coated with ink was subjected to steam heat treatment at 170°C for 10 minutes using an HT-3-550 type HT steamer manufactured by Tsujii Senki Kogyo Co., Ltd.

<Washing Treatment>

The textile after the steam heat treatment was rubbed about twice per second and washed with water for 10 minutes. 2 g/L of a surfactant (amylazine D), 2 g/L of sodium hydrosulfite, and 2 g/L of NaOH (particle) were added to warm water at 80°C and dissolved. Then, the textile washed with water was added and reduction washing was performed for 10 minutes to wash off the pretreatment agent and excess ink adhering to the textile. After the reduction washing, the textile was washed with water again to wash off a reduction washing agent adhering to the textile.

[Reference Examples 1 and 2]

In Reference Example 1, a pretreatment agent containing no cationic polymer was prepared. A textile was dried with a dryer for 10 minutes after applying the pretreatment agent, and then inkjet printing was performed. As a pasting agent, sodium alginate was used. In Reference Example 2, after applying the same pretreatment agent as in Reference Example 1, inkjet printing was performed without drying. In Reference Examples 1 and 2, black disperse ink manufactured by TOSHIN KOGYO CO.,LTD was used.

The steam heat treatment and the washing treatment after printing were performed out in the same manner as in Examples 1 and 2.

[Evaluation Test]

The following evaluations were performed on an evaluation textile on which inkjet textile printing had been performed after the pretreatment of each example.

<Bleeding>

Resistance to ink bleeding was evaluated as follows.

When the printed image pattern is visually observed from a position 30 cm away from the textile, a case, in which an appearance of intersections of grids was clearly visible as much as that of Reference Example 1, was evaluated as "A", a case, in which the appearance was inferior to that of Reference Example 1 but was clearly visible, was evaluated as "B", and a case, in which there was a problem in practical use because the intersections were not observable, was evaluated as "C".

<Permeability>

An ink permeation state was checked from a back surface side of the textile with reference to Reference Example 1. An equivalent case to that of Reference Example 1 was determined as "A", and a case with an inferior ink permeation state was determined as "B".

<Texture>

A bending manner at a time when a textile was bent by hand with reference to Reference Example 1 was checked. A case, in which a fold was formed by the remaining pretreatment agent, was determined as "B", and a case, in which a fold was not formed because of tension of the textile with no remaining pretreatment agent and a bent portion was rounded, was determined as "A"

<Detergency>

With reference to Reference Example 1, whether or not the pretreatment agent applied to the textile remained was checked by visual observation, and determined according to the following evaluation criteria.

A: An equivalent case to that of Reference Example 1 (the remaining pretreatment agent was not observable regardless of whether the textile was placed on a table and checked, or the textile was checked through a fluorescent lamp).
B: A case in which a remaining amount of the pretreatment agent slightly existed as compared with that of Reference Example 1 (the remaining pretreatment agent was not observable only by placing the textile on a table to check the textile, but the pretreatment agent was observable only after the textile was viewed through a fluorescent lamp).
C: A case in which the remaining amount of the pretreatment agent is larger than that of Reference Example 1 (the remaining amount of the pretreatment agent was observable by only placing the textile on the table to check the textile).

[Table 1]

| | | Presence of drying | Cationic polymer Type / Content (%) | Cationic degree (meq/g) | Viscosity (mPa·s) | Antifoaming agent Type / Content (%) | Content ratio (mass ratio) of antifoaming agent to cationic polymer | Color deepening agent Type / Content (%) | Pasting agent Type / Content (%) | Surfactant Type / Content (%) | Preservative Content (%) | Bleeding | Permeability | Texture | Detergency |
|---|---|---|---|---|---|---|---|---|---|---|---|---|---|---|---|
| Example | 1 | N | PVADL / 1 | 5.1 | 152.5 | Alcohol-based 1 / 2.5 | 2.5 | N-alkylolamide / 4.5 | Hydroxypropyl methyl cellulose / 1.5 | Glycerin / 0.5 | 0.5 | A | A | A | A |
| | 2 | N | PVAM / 1 | 8.3 | 185.5 | Alcohol-based 1 / 2.5 | 2.5 | N-alkylolamide / 4.5 | Hydroxypropyl methyl cellulose / 1.5 | Glycerin / 0.5 | 0.5 | B | A | A | A |
| | 3 | N | PVADL / 1 | 5.1 | 152.5 | Silicone-based / 2.5 | 2.5 | N-alkylolamide / 4.5 | Hydroxypropyl methyl cellulose / 1.5 | Glycerin / 0.5 | 0.5 | A | A | A | C |
| | 4 | N | PVADL / 1 | 5.1 | 152.5 | Fatty acid derivative-based / 2.5 | 2.5 | N-alkylolamide / 4.5 | Hydroxypropyl methyl cellulose / 1.5 | Glycerin / 0.5 | 0.5 | A | A | A | A |
| | 5 | N | PVADL / 1 | 5.1 | 152.5 | Alcohol-based 2 / 2.5 | 2.5 | N-alkylolamide / 4.5 | Hydroxypropyl methyl cellulose / 1.5 | Glycerin / 0.5 | 0.5 | A | A | A | A |
| | 6 | N | PVADL / 1 | 5.1 | 152.5 | Silicone-based / 2.5 | 2.5 | - / 0 | - / 0 | - / 0 | - | A | A | A | A |
| | 7 | N | PVADL / 1 | 5.1 | 152.5 | Fatty acid derivative-based / 2.5 | 2.5 | - / 0 | - / 0 | - / 0 | - | A | A | A | A |
| | 8 | N | PVADL / 1 | 5.1 | 152.5 | Alcohol-based 2 / 2.5 | 2.5 | - / 0 | - / 0 | - / 0 | - | A | A | A | A |
| | 9 | N | PVADL / 1 | 5.1 | 152.5 | Alcohol-based 1 / 2.5 | 2.5 | - / 0 | - / 0 | Glycerin / 0.5 | 0.5 | A | A | A | A |
| | 10 | N | PVADL / 1 | 5.1 | 152.5 | Alcohol-based 1 / 2.5 | 2.5 | - / 0 | - / 0 | - / 0 | - | A | A | A | A |
| | 11 | N | PVADL / 1 | 5.1 | 152.5 | Alcohol-based 1 / 2.5 | 2.5 | N-alkylolamide / 4.5 | - / 0 | Glycerin / 0.5 | 0.5 | B | A | A | C |

[Table 2]

| | | Presence of drying | Cationic polymer Type / Content (%) | Cationic degree (meq/g) | Viscosity (mPa·s) | Antifoaming agent Type / Content (%) | Content ratio (mass ratio) of antifoaming agent to cationic polymer | Color deepening agent Type / Content (%) | Pasting agent Type / Content (%) | Surfactant Type / Content (%) | Preservative Content (%) | Bleeding | Permeability | Texture | Detergency |
|---|---|---|---|---|---|---|---|---|---|---|---|---|---|---|---|
| Comparative Example | 1 | N | Poly DADMAC / 1 | - | - | Alcohol-based 1 / 2.5 | 2.5 | N-alkylolamide / 4.5 | Hydroxypropyl methyl cellulose / 1.5 | Glycerin / 0.5 | 0.5 | C | A | A | B |
| | 2 | N | Polyallylamine / 1 | 15.9 | 20.1 | Alcohol-based 1 / 2.5 | 2.5 | N-alkylolamide / 4.5 | Hydroxypropyl methyl cellulose / 1.5 | Glycerin / 0.5 | 0.5 | C | A | A | B |
| | 3 | N | Amine-epichlorohydrin condensation polymer / 1 | - | - | Alcohol-based 1 / 2.5 | 2.5 | N-alkylolamide / 4.5 | Hydroxypropyl methyl cellulose / 1.5 | Glycerin / 0.5 | 0.5 | C | A | A | B |
| | 4 | N | PVADL / 1 | 5.1 | 152.5 | - / 0 | - | - / 0 | - / 0 | - / 0 | 0 | B | B | B | C |
| | 5 | N | PVADL / 1.5 | 5.1 | 152.5 | - / 0 | - | - / 0 | - / 0 | - / 0 | 0 | B | B | B | C |
| | 6 | N | PVADL / 2 | 5.1 | 152.5 | - / 0 | - | - / 0 | - / 0 | - / 0 | 0 | B | B | B | C |
| Reference Example | 1 | Y | - / 0 | - | - | Alcohol-based 1 / 2.5 | - | N-alkylolamide / 4.5 | Sodium alginate / 4.2 | Glycerin / 0.5 | 0.5 | A | A | A | B |
| | 2 | N | - / 0 | - | - | Alcohol-based 1 / 2.5 | - | N-alkylolamide / 4.5 | Sodium alginate / 4.2 | Glycerin / 0.5 | 0.5 | C | A | A | B |

[Examples 12 to 17 and Comparative Examples 7 to 11]

<Compatibility Test>

For the compatibility between the color deepening agent and the N-vinylformamide-based cationic polymer, 250 g of a 1% by mass aqueous solution of the N-vinylformamide-based cationic polymer (PVADL) and 250 g of a 1% by mass aqueous solution of the color deepening agent were mixed and the mixture was filtered through an 80-mesh sieve after being left for 24 hours at 25°C. A case with a sieve residue less than 10 g was defined as "A", and a case with a sieve residue of 10 g or more was defined as "B". The compatibility between the pasting agent and the N-vinylformamide-based cationic polymer was maintained in the same manner except that 250 g of a 1% by mass aqueous solution of the N-vinylformamide-based cationic polymer and 250g of a 1% by mass aqueous solution of the pasting agent were mixed. Evaluation results are shown in Table 3.

[Table 3]

| | | | Example | | | | | | Comparative Example | | | | |
|---|---|---|---|---|---|---|---|---|---|---|---|---|---|
| | | | 12 | 13 | 14 | 15 | 16 | 17 | 7 | 8 | 9 | 10 | 11 |
| Pasting agent | Sodium alginate | | | | | | | | | O | | | |
| | Carboxymethyl cellulose | | | | | | | | | | O | | |
| | Tamarind | | | | | | | | | | | O | |
| | Guar gum | | | O | | | | | | | | | |
| | Methyl cellulose | | | | O | | | | | | | | |
| | Hydroxypropyl methyl cellulose | | O | | | | | | | | | | |
| | Hydroxyethyl cellulose | | | | | O | | | | | | | |
| | Processed starch (Solvitose) | | | | | | | | | | | | O |
| Color deepening agent | Sanfloren SN | | | | | | O | | | | | | |
| | Hiol 420 | | | | | | | O | | | | | |
| | Cellopol PA-19S | | | | | | | | O | | | | |
| Compatibility | | | A | A | A | A | A | A | B | B | B | B | B |

As shown in Table 3, as the pasting agents, methyl cellulose, hydroxypropyl methyl cellulose, hydroxyethyl cellulose, and guar gum had compatibility with the N-vinylformamide-based cationic polymers. As the color deepening agents, N-alkylolamide and glycol ether had compatibility with the N-vinylformamide-based cationic polymer.

As shown in Table 1, in Examples 1 and 2, even if inkjet printing was performed in an undried state after the pretreatment, a textile having permeability and resistance to bleeding equivalent to that of Reference Example 1, in which the textile was dried after the pretreatment and then inkjet printing was performed, was obtained.

On the other hand, in Comparative Examples 1 to 3 in which the pretreatment agents did not contain the N-vinylformamide-based cationic polymer, ink bled when inkjet printing was performed without drying. In Comparative Examples 4 to 7 in which the pretreatment agents did not contain the color deepening agent and the antifoaming agent, the permeability was inferior when inkjet printing was performed without drying.

[Examples 18 to 22]

Inkjet textile printing of textiles was performed in the same manner as in Example 1 except that formulations of the pretreatment agents were changed as shown in Table 4. Table 4 shows evaluation results of the bleeding, the permeability, the texture, and the detergency.

The expression method of each component in Table 4 is the same as that in Table 1.

[Table 4]

| | | Presence of drying | Cationic polymer Type / Content (%) | Cationic degree (meq/g) | Viscosity (mPa·s) | Antifoaming agent Type / Content (%) | Content ratio (mass ratio) of antifoaming agent to cationic polymer | Color deepening agent Type / Content (%) | Pasting agent Type / Content (%) | | Bleeding | Permeability | Texture | Detergency |
|---|---|---|---|---|---|---|---|---|---|---|---|---|---|---|
| Example | 18 | N | PVADL / 1 | 5.1 | 152.5 | Alcohol-based 1 / 2.5 | 2.5 | N-alkylolamide / 4.5 | Hydroxypropyl methyl cellulose / 1 | | B | A | A | B |
| | 19 | N | PVADL / 1 | 5.1 | 152.5 | Alcohol-based 1 / 2.5 | 2.5 | N-alkylolamide / 4.5 | Hydroxypropyl methyl cellulose / 1.5 | Montmorillonite / 0.5 | B | A | A | A |
| | 20 | N | PVADL / 1 | 5.1 | 152.5 | Alcohol-based 1 / 2.5 | 2.5 | N-alkylolamide / 4.5 | Montmorillonite / 0.5 | Guar gum / 1.0 | B | A | A | A |
| | 21 | N | PVADL / 1 | 5.1 | 152.5 | Alcohol-based 1 / 1.5 | 1.5 | N-alkylolamide / 4.5 | Hydroxypropyl methyl cellulose / 1 | | B | A | B | C |
| | 22 | N | PVADL / 1 | 5.1 | 152.5 | Alcohol-based 1 / 3.5 | 3.5 | N-alkylolamide / 4.5 | Hydroxypropyl methyl cellulose / 1 | | B | A | A | B |

As shown in Table 4, even if the antifoaming agent content with respect to the N-vinylformamide-based cationic polymer in the pretreatment agent was changed and inkjet printing was performed in the undried state after the pretreatment, a textile with favorable permeability and favorable resistance to bleeding was obtained. In addition, when Examples 18 to 20 were compared, the detergency was further excellent when two or more types of the pasting agents containing montmorillonite were used as the pasting agent.

[Examples 23 to 26]

Inkjet textile printing of textiles was performed in the same manner as in Example 1 except that the formulations of the pretreatment agents were changed as shown in Table 5. Table 5 shows evaluation results of the bleeding, the permeability, the texture, and the detergency. In Examples 23 to 26, CYAN, MAGENTA, YELLOW, and N. BLACK ofE-TEXTILE series manufactured by KIWA Chemical Industry Co., Ltd. were respectively used.
The expression method of each component in Table 5 is the same as that in Table 1.

[Table 5]

| | | | Example | | | |
|---|---|---|---|---|---|---|
| | | | 23 | 24 | 25 | 26 |
| Presence of drying | | | N | N | N | N |
| Cationic polymer | N-vinylforma mide-based | PVADL | 1.0% | 1.0% | 1.0% | 1.0% |
| Pasting agent | Hydroxypropyl methyl cellulose | | 1.0% | 1.0% | 1.0% | 1.0% |
| Color deepening agent | Sanfloren SN | | 4.5% | 4.5% | 4.5% | 4.5% |
| Antifoaming agent | Alcohol-based antifoaming agent | | 2.5% | 2.5% | 2.5% | 2.5% |
| Ink | | | CYAN | MAGENT | YELLOW | N.BLACK |

(continued)

| | | Example | | | |
|---|---|---|---|---|---|
| | | 23 | 24 | 25 | 26 |
| Evaluation | Bleeding | B | B | B | B |
| | Permeability | A | A | A | A |
| | Texture | A | A | A | A |
| | Detergency | B | B | B | B |

As shown in Table 5, in Examples 23 to 26, regardless of color of ink, even if an inkjet printing was performed in the undried state after the pretreatment, a textile having permeability and resistance to bleeding that are substantially equivalent to that of Reference Example 1 was obtained.

[Industrial Applicability]

According to the present invention, in inkjet textile printing of a textile using dye ink, ink is applied without drying after applying the pretreatment agent, thereby realizing improvement in productivity, cost reduction, energy saving, and space saving without compromising in ink permeation and bleeding.

**Claims**

1.  A pretreatment agent for inkjet textile printing comprising:
    an N-vinylformamide-based cationic polymer and an antifoaming agent.

2.  The pretreatment agent for inkjet textile printing according to Claim 1, wherein a content ratio (mass ratio) of the antifoaming agent to the N-vinylformamide-based cationic polymer in the pretreatment agent for inkjet textile printing is 2.0 or more.

3.  The pretreatment agent for inkjet textile printing according to Claim 1 or 2, wherein a content ratio (mass ratio) of the antifoaming agent to the N-vinylformamide-based cationic polymer in the pretreatment agent for inkjet textile printing is 4.0 or less.

4.  The pretreatment agent for inkjet textile printing according to any one of Claims 1 to 3, wherein the antifoaming agent contains one or more types selected from the group consisting of an alcohol-based antifoaming agent and a fatty acid derivative-based antifoaming agent.

5.  The pretreatment agent for inkjet textile printing according to any one of Claims 1 to 4, further comprising a color deepening agent.

6.  The pretreatment agent for inkjet textile printing according to Claim 5, wherein the color deepening agent has compatibility with the N-vinylformamide-based cationic polymer.

7.  The pretreatment agent for inkjet textile printing according to Claim 5 or 6, wherein the color deepening agent contains one or more types selected from the group consisting of N-alkylolamide and glycol ethers.

8.  The pretreatment agent for inkjet textile printing according to any one of Claims 1 to 7, further comprising a pasting agent.

9.  The pretreatment agent for inkjet textile printing according to Claim 8, wherein the pasting agent includes a pasting agent having compatibility with the N-vinylformamide-based cationic polymer and being nonionic or anionic.

10. The pretreatment agent for inkjet textile printing according to Claim 8 or 9, wherein the pasting agent contains one or more types selected from the group consisting of methyl cellulose, hydroxypropyl methyl cellulose, hydroxyethyl cellulose, and guar gum.

**11.** The pretreatment agent for inkjet textile printing according to any one of Claims 8 to 10, wherein the pasting agent further contains montmorillonite.

**12.** The pretreatment agent for inkjet textile printing according to any one of Claims 1 to 11, wherein the N-vinylformamide-based cationic polymer contains one or more types selected from the group consisting of polyamidine and polyvinylamine.

**13.** The pretreatment agent for inkjet textile printing according to any one of Claims 1 to 12, wherein a content of N-vinylformamide-based cationic polymer is 0.6% by mass or more and 1.4% by mass or less with respect to 100% by mass of a total mass of the pretreatment agent for inkjet textile printing.

**14.** A pretreatment agent for inkjet textile printing comprising a cationic polymer and an antifoaming agent, wherein a cationic degree of the cationic polymer is 5.0 meq/g or more and a viscosity of the cationic polymer is 100 mPa·s or more.

**15.** An inkjet textile printing method comprising pretreating a textile with the pretreatment agent for inkjet textile printing according to any one of Claims 1 to 14 and performing inkjet printing on a pretreated area of the pretreated textile without drying the pretreated textile.

**16.** The inkjet textile printing method according to Claim 15, wherein ink used in the inkjet printing is a disperse dye.

**17.** An inkjet textile printing method comprising:

pretreating a textile with a pretreatment agent for inkjet textile printing; and
performing inkjet printing on a pretreated area of the pretreated textile without drying the pretreated textile,
wherein the pretreatment agent for inkjet textile printing contains an N-vinylformamide-based cationic polymer.

## INTERNATIONAL SEARCH REPORT

| | International application No. |
|---|---|
| | **PCT/JP2022/015465** |

**A. CLASSIFICATION OF SUBJECT MATTER**

*D06P 1/44*(2006.01)i; *D06P 1/50*(2006.01)i; *D06P 1/56*(2006.01)i; *D06P 5/00*(2006.01)i; *D06P 5/30*(2006.01)i; *D06M 15/09*(2006.01)i; *D06M 15/227*(2006.01)i

FI: D06P5/00 104; D06P5/00 105; D06P5/30; D06P1/44 D; D06P1/44 Z; D06P1/50; D06P1/56; D06M15/227; D06M15/09

According to International Patent Classification (IPC) or to both national classification and IPC

**B. FIELDS SEARCHED**

Minimum documentation searched (classification system followed by classification symbols)

D06P1/44; D06P1/50; D06P1/56; D06P5/00; D06P5/30; D06M15/09; D06M15/227; C09D11/30; C09D11/54

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2002-348786 A (SEIREN CO., LTD.) 04 December 2002 (2002-12-04) claim 1, paragraphs [0025], [0041], example 3 | 1-14 |
| A | entire text | 15-17 |
| Y | JP 2008-504465 A (BASF AG) 14 February 2008 (2008-02-14) claim 1, paragraphs [0013], [0048], [0083], [0104], [0109], [0111], [0124]-[0135], tables 1-2, pretreatment liquid F1 | 1-17 |
| Y | JP 2009-133057 A (SEIKO EPSON CORP.) 18 June 2009 (2009-06-18) paragraph [0017], table 1, examples | 5-7 |
| Y | JP 10-53974 A (SUMINOE TEXTILE CO., LTD.) 24 February 1998 (1998-02-24) paragraphs [0020]-[0025], table 1, example 3 | 11 |
| Y | JP 2007-31847 A (NICCA CHEMICAL CO., LTD.) 08 February 2007 (2007-02-08) claims, paragraph [0007], examples | 1-17 |

☑ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **08 June 2022** | **21 June 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

International application No.

**PCT/JP2022/015465**

### C. DOCUMENTS CONSIDERED TO BE RELEVANT

| Category* | Citation of document, with indication, where appropriate, of the relevant passages | Relevant to claim No. |
|---|---|---|
| Y | JP 10-325084 A (CIBA SPECIALTY CHEM. HOLDING INC.) 08 December 1998 (1998-12-08) claims, paragraph [0003], examples | 1-17 |
| Y | JP 9-310288 A (DAISUTAA JAPAN KK) 02 December 1997 (1997-12-02) claims, paragraph [0021], examples | 1-17 |
| Y | JP 2016-89288 A (SEIKO EPSON CORP.) 23 May 2016 (2016-05-23) paragraphs [0002]-[0004] | 15-17 |
| A | JP 2016-215147 A (KURARAY CO., LTD.) 22 December 2016 (2016-12-22) paragraph [0131] | 1-14 |
| A | JP 2005-75898 A (KONISHI CO., LTD.) 24 March 2005 (2005-03-24) paragraph [0036] | 1-14 |
| A | JP 2002-275769 A (SEIREN CO., LTD.) 25 September 2002 (2002-09-25) entire text, all drawings, particularly, example 6 | 1-17 |
| A | JP 9-279487 A (HYMO CORP.) 28 October 1997 (1997-10-28) entire text | 1-17 |
| A | JP 2017-206789 A (YKK CORP.) 24 November 2017 (2017-11-24) entire text, all drawings | 1-17 |
| A | JP 2020-82731 A (RICOH CO., LTD.) 04 June 2020 (2020-06-04) entire text, all drawings, particularly, table 4, treatment liquid 4 | 1-17 |

Form PCT/ISA/210 (second sheet) (January 2015)

**INTERNATIONAL SEARCH REPORT**
Information on patent family members

| | International application No. |
|---|---|
| | **PCT/JP2022/015465** |

| Patent document cited in search report | Publication date (day/month/year) | Patent family member(s) | Publication date (day/month/year) |
|---|---|---|---|
| JP 2002-348786 A | 04 December 2002 | (Family: none) | |
| JP 2008-504465 A | 14 February 2008 | US 2009/0191383 A1 claim 15, paragraphs [0014], [0054], [0093], [0118], [0123], [0125], [0145]-[0156], tables 1-2, pretreatment liquid F1 | |
| JP 2009-133057 A | 18 June 2009 | (Family: none) | |
| JP 10-53974 A | 24 February 1998 | (Family: none) | |
| JP 2007-31847 A | 08 February 2007 | (Family: none) | |
| JP 10-325084 A | 08 December 1998 | US 5948125 A claims, column 1, lines 27-31, examples | |
| JP 9-310288 A | 02 December 1997 | (Family: none) | |
| JP 2016-89288 A | 23 May 2016 | (Family: none) | |
| JP 2016-215147 A | 22 December 2016 | (Family: none) | |
| JP 2005-75898 A | 24 March 2005 | (Family: none) | |
| JP 2002-275769 A | 25 September 2002 | (Family: none) | |
| JP 9-279487 A | 28 October 1997 | (Family: none) | |
| JP 2017-206789 A | 24 November 2017 | (Family: none) | |
| JP 2020-82731 A | 04 June 2020 | US 2020/0156389 A1 entire text, all drawings, particularly, table 4, treatment liquid 4 | |

Form PCT/ISA/210 (patent family annex) (January 2015)

**REFERENCES CITED IN THE DESCRIPTION**

**Patent documents cited in the description**

- JP 2021056358 A
- JP H11302987 A
- JP 2003003385 A
- JP H09279487 A
- JP 2017530269 W
- JP 2016089288 A